# EUROPEAN PATENT SPECIFICATION

(11) **EP 2 866 336 B1**
(45) Date of publication and mention of the grant of the patent: **05.09.2018**
(21) Application number: 12879618.2
(22) Date of filing: 26.06.2012
(51) Int. Cl.: H02K 21/16, H02K 1/16, H02K 29/03

(54) **ELECTRIC MOTOR HAVING EMBEDDED PERMANENT MAGNET, COMPRESSOR, AND COOLING/AIR-CONDITIONING DEVICE**
ELEKTROMOTOR MIT EINGEBETTETEM DAUERMAGNETEN, VERDICHTER SOWIE KÜHL-/KLIMAANLAGE
MOTEUR ÉLECTRIQUE AYANT UN AIMANT PERMANENT INTÉGRÉ, UN COMPRESSEUR ET UN DISPOSITIF DE REFROIDISSEMENT/CLIMATISATION

(43) Date of publication of application: 29.04.2015
(73) Proprietor: Mitsubishi Electric Corporation, Tokyo 100-8310 (JP)
(72) Inventor: NIGO, Masahiro, Tokyo 100-8310 (JP); BABA, Kazuhiko, Tokyo 100-8310 (JP); TSUCHIDA, Kazuchika, Tokyo 100-8310 (JP)
(74) Representative: Pfenning, Meinig & Partner mbB
(86) International application number: PCT/JP2012/066290
(87) International publication number: WO 2014/002195

(56) References cited:
- EP-A1- 1 014 541
- JP-A- H1 189 197
- JP-A- 2002 335 642
- JP-A- 2002 335 642
- JP-A- 2003 088 012
- JP-A- 2003 088 012
- JP-A- 2010 220 324
- JP-A- 2010 220 324

## Description

### Field

The present invention relates to a permanent-magnet-embedded electric motor, a compressor, and a refrigeration air conditioning apparatus.

### Background

An electric motor mounted on an air-conditioner compressor is required to have low-power consumption and to be low-noise emission together with having guaranteed operability in a high-temperature atmosphere of approximately 150°C. In general, an Nd-Fe-B rare earth magnet has high residual magnetic flux density and is suited for reducing the size and improving the efficiency of an electric motor. However, because coercive forces decrease as temperature rises, there is a problem in that, when comparisons are made at the same electric current, an electric motor used in a higher-temperature atmosphere is more easily demagnetized. Therefore, to prevent a rare earth magnet from being demagnetized in a high-temperature atmosphere, a heavy rare earth element such as Dy (dysprosium) or Tb (terbium) is added to the rare earth magnet to improve the coercive force and to prevent demagnetization during used. However, in recent years, the rarity values of heavy rare earth elements have increased, and the risks related to procurement and to prices have risen. Reflecting such circumstances, there is a demand for an electric motor that has high efficiency and low-noise emissions, is capable of using a rare earth magnet with a low coercive force without being demagnetized, and is durable against demagnetization.

Patent Literature 1 discloses a technology, for obtaining a permanent magnet electric motor that has high efficiency, low cogging torque, and little vibration and noise, in which a permanent magnet embedding hole and a magnetic flux short-circuit preventing hole in contact with the end of the permanent magnet that is to be embedded in the permanent magnet embedding hole are provided in a rotor core adjacent to the outer circumference of the rotor core; in which short-circuiting of the magnetic flux in the permanent magnet end is prevented by using a rotor including the permanent magnet embedded in the permanent magnet embedding hole; and in which the magnetic flux at the end of the permanent magnet reaches the stator and effectively acts as a torque generation.

### Citation List

### Patent Literature

Patent Literature 1: Japanese Patent Application Laid-Open No. H11-098731
EP1014541A1 provides a permanent-magnet-synchronous-motor having a stator with concentrating windings with the following structure so that permanent magnet is hard to subjected to demagnetization magnetic field: 0.3 Lg < La </= 2.0 Lg, where La is a clearance between teeth of stator, and Lg is an air-gap between stator and rotor, and yet outer walls of both ends of the permanent magnet disposed within rotor in a rim direction are tapered toward inside from a rotor rim in a radial direction and thus form recessed section on the outer walls of the magnets. As a result, withstanding force against demagnetization is expected to increase.
JP2010220324A provides a highly efficient, low-noise electric motor wherein the distortion of the magnetic flux of a stator and the concentration of magnetic flux are suppressed by eliminating punching distortion in the stator. JP2002335642A provides a rotary machine which can reduce torque ripples in a full operating condition.

### Summary

### Technical Problem

However, in a conventional permanent magnet electric motor, a large armature reaction occurs and an opposing magnetic field is sometimes applied to the rotor, for example, in cases when a load is large, when the permanent magnet electric motor changes to a lock state during an operation because of an excess load, when the permanent magnet electric motor is in a transient state during startup or the like, or when a stator winding wire is short-circuited. In particular, in the case of a concentrated winding system, teeth adjacent to each other instantaneously change to unlike poles, inductance increases, and an opposing magnetic field is easily applied to the rotor.

In a case where a permanent magnetic is embedded in a rotor surface, in particular, when a flux short-circuit preventing hole is provided on the rotor outer circumference side at the end of the permanent magnet, a magnetic flux is easily concentrated at a thin part in the rotor outer circumference due to its structure. Thus, there is a problem in that, in a case where the thin part in the rotor outer circumference is magnetically saturated, a part of an opposing magnetic field passes through the permanent magnet so as to demagnetize the permanent magnet.

The present invention has been made in view of the above, and it is an object of the present invention to provide a permanent-magnet-embedded electric motor, a compressor, and a refrigeration air conditioning apparatus that do not spoil the magnetic characteristic of the rotor and have excellent demagnetization characteristics.

### Solution to Problem

To solve the problems and achieve the objective described above, a permanent-magnet-embedded electric motor according to claim 1 is provided. The permanent-magnet-embedded electric motor includes: a stator configured by winding winding wires around teeth sections of a stator core configured by annularly coupling a plurality of divided cores, the teeth sections being provided between a plurality of slot sections opened to an inner circumference side and slot sections adjacent to the slot sections; and a rotor rotatably arranged on an inner side of the stator and embedded with permanent magnets respectively in a plurality of magnet insertion holes provided along a circumferential direction in an outer circumference section of a rotor core, magnetic flux short-circuit preventing holes being respectively provided at both ends in the circumferential direction of the magnet insertion holes. The teeth sections include: base sections formed by radial-direction extending sections extending in a radial direction and circumferential-direction sections connected to inner diameter sides of the radial-direction extending sections and extending along an outer circumferential surface of the rotor; and increased magnetic-resistance sections provided at least at one end in the circumferential direction of the circumferential-direction extending sections and having magnetic resistance larger than magnetic resistance of the base sections, and given that a minimum interval in the circumferential direction between the base sections adjacent to each other is represented as La, an interval of a minimum gap between the teeth sections adjacent to each other is represented as Lb, and an interval of a gap between the rotor and the stator is represented as Lg, a relation of La>2Lg>Lb holds.

### Advantageous Effects of Invention

According to the present invention, a permanent-magnet-embedded electric motor can be provided that does not spoil the magnetic characteristic of the rotor and has excellent demagnetization characteristics.

### Brief Description of Drawings

FIG. 1 is a cross sectional view of the configuration of a permanent-magnet-embedded electric motor according to a first embodiment.
FIG. 2 is a partially enlarged sectional view of FIG. 1.
FIG. 3 is a partially enlarged sectional view of the configuration of a conventional electric motor.
FIG. 4 is a diagram showing a state in which an opposing magnetic field (a demagnetizing field) occurs in a conventional permanent-magnet-embedded electric motor.
FIG. 5 is a diagram of a state in which an opposing magnetic field occurs in the configuration shown in FIG. 1.
FIG. 6 is a diagram of a comparison result of demagnetizing percentages in permanent magnets having the same coercive force after the opposing magnetic field is applied to a rotor in the electric motor according to the first embodiment and the conventional electric motor.
FIG. 7 is a diagram of a coupling body for divided cores.
FIG. 8 is a partially enlarged sectional view of the configuration of a permanent-magnet-embedded electric motor according to a second embodiment.
FIG. 9 is a partially enlarged sectional view of the configuration of a permanent-magnet-embedded electric motor according to a third embodiment.
FIG. 10 is a partially enlarged sectional view of the configuration of a permanent-magnet-embedded electric motor according to a fourth embodiment.
FIG. 11 is a diagram of the relation between induced voltage and demagnetization durability with respect to the ratio of magnetic resistances of increased magnetic-resistance sections to a base section.

### Description of Embodiments

Embodiments of a permanent-magnet-embedded electric motor, a compressor, and a refrigeration air conditioning apparatus according to the present invention are explained in detail below with reference to the drawings. Note that the present invention is not limited to these embodiments.

### First Embodiment

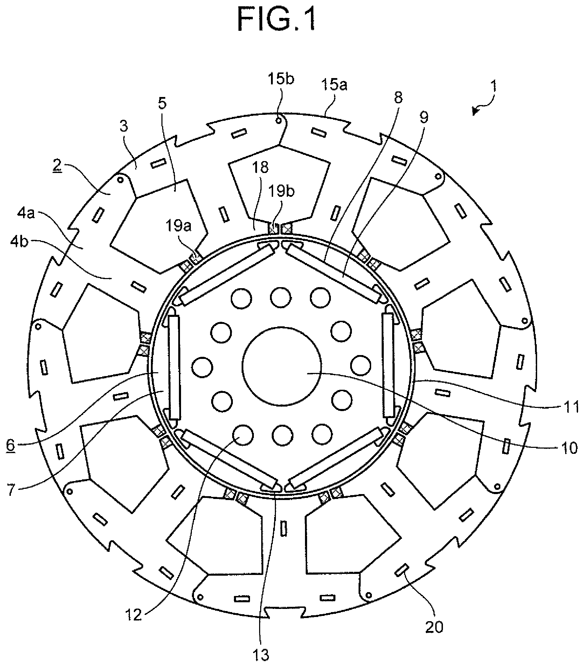

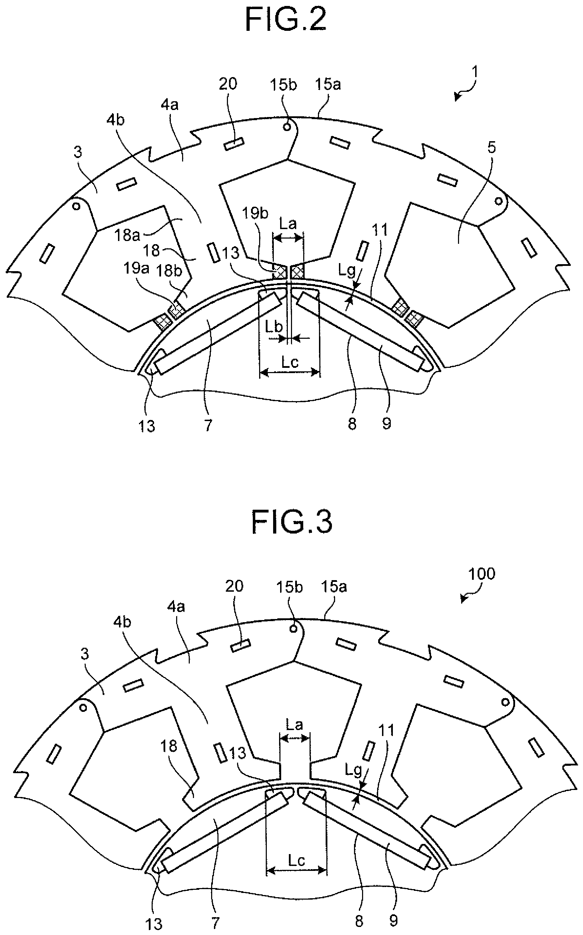

FIG. 1 is a cross sectional view of the configuration of a permanent-magnet-embedded electric motor according to the embodiment. FIG. 2 is a partially enlarged sectional view of FIG. 1. The configuration of the permanent-magnet-embedded electric motor according to the embodiment is explained below with reference to FIG. 1 and FIG. 2.

An electric motor 1 according to the embodiment includes an annular stator 2 and a rotor 6 rotatably arranged on the inner side of the stator 2 with an air gap 11 therebetween.

The stator 2 includes an annular stator core 3 and a stator winding wire (not shown in the figure) that is wound around the stator core 3. The stator core 3 includes a back yoke section 4a on the outer circumference side and a plurality of teeth sections 4b each projecting toward the inner side in the radial direction from the back yoke section 4a and provided at substantially equal intervals in the circumferential direction. Stator winding wires are wound around the teeth sections 4b in, for example, a concentrated winding system. Slot sections 5, which are voids, are provided among the teeth sections 4b adjacent to one another. In other words, the teeth sections 4b are provided between the adjacent slot sections 5 opening to the inner circumference side. Note that, in the example shown in the figure, the number of the teeth sections 4b is, for example, nine. The stator core 3 is formed by laminating a predetermined number of thin electromagnetic steel plates formed in a predetermined shape and having a thickness of, for example, approximately 0.35 millimeter. Swaged sections 20, which are places where the electromagnetic steel plates are swaged, are formed in predetermined parts of the stator core 3.

The rotor 6 is a permanent magnet embedded type and includes a rotor core 7 and permanent magnets 9 embedded in magnet insertion holes 8 provided in the outer circumference section of the rotor core 7. A plurality of magnetic insertion holes 8 are formed and are arranged at substantially equal intervals in the circumferential direction. In the example shown in the figure, the number of the magnet insertion holes 8 is, for example, six. The magnet insertion holes 8 are arranged along the outer circumference section. A sectional shape of the magnet insertion holes 8 is, for example, a substantial rectangle elongated in the circumferential direction.

The magnet insertion holes 8 have a sectional shape substantially the same as the sectional shape of the permanent magnets 9. The permanent magnets 9 formed in a flat shape and having a thickness of, for example, approximately 2 millimeters are inserted into the magnet insertion holes 8. The permanent magnets 9 can be, for example, Nd-Fe-B (neodymium-iron-boron) rare earth magnets. One piece of permanent magnet 9 is inserted into the magnet insertion hole 8 per one pole. The permanent magnet 9 is magnetized in a direction parallel to its thickness direction. The plurality of permanent magnets 9 are arranged such that polarities are alternate in the circumferential direction. Note that the number of magnetic poles that the rotor has can be any number as long as the number is two or more. In the example explained herein, the rotor has six magnetic poles. Although, for example, the Nd-Fe-B (neodymium-iron-boron) rare earth magnets are used as the permanent magnets 9, the type of the permanent magnets 9 is not limited to this.

The magnet insertion hole 8 includes magnetic flux short-circuit preventing holes 13 at both ends in the circumferential direction. In a situation where the permanent magnet 9 is inserted into the magnet insertion hole 8, the magnetic flux short-circuit preventing holes 13 are voids provided at both ends in the circumferential direction of the permanent magnet 9. That is, the magnet insertion hole 8 includes a main body portion into which the permanent magnet 9 is inserted and a pair of magnetic flux short-circuit preventing holes 13 that are coupled to the main body section. The magnetic flux short-circuit preventing holes 13 are designed such that in the magnet insertion hole 8, a magnetic flux is not short-circuited between the magnets adjacent to each other and a magnetic path is narrowed. The width of an inter-pole thin section, which is a portion between the outer circumferential surface of the rotor core 7 and the magnetic flux short-circuit preventing holes 13, is set to, for example, 0.35 millimeter, which is approximately equivalent to the thickness of the electromagnetic steel plate. Such a configuration of the rotor is adopted to prevent short-circuiting of the magnetic flux at the end of the permanent magnet 9, to easily transfer the magnetic flux at the end of the permanent magnet 9 to the stator 2, and to increase generated torque.

A shaft hole 10, into which a shaft (not shown in the figure) for transmitting rotation energy is inserted, is formed in the center of the rotor core 7. The shaft (not shown in the figure) is, for example, shrunk-fit or pressed-fit in the shaft hole 10 and coupled to the rotor 6. Further, in the rotor core 7, a plurality of air holes 12 function as refrigerant channels and are provided in the axial direction more on the inner diameter side than the magnet insertion holes 8. The rotor core 7 is formed by laminating a predetermined number of thin electromagnetic steel plates formed in a predetermined shape and having a thickness of, for example, approximately 0.35 millimeter.

Details of the stator 2 are explained here. The stator 2 is formed by annularly coupling a plurality of divided cores 15, which are T-shaped magnetic sections and each formed by the back yoke section 4a and the teeth section 4b projecting from the back yoke section 4a. That is, the divided cores 15 are coupled to be bendable via coupling sections 15b formed in the back yoke sections 4a. An annular stator structure is formed by appropriately bending the coupling sections 15b (see, for example, Japanese Patent No. 3828015).

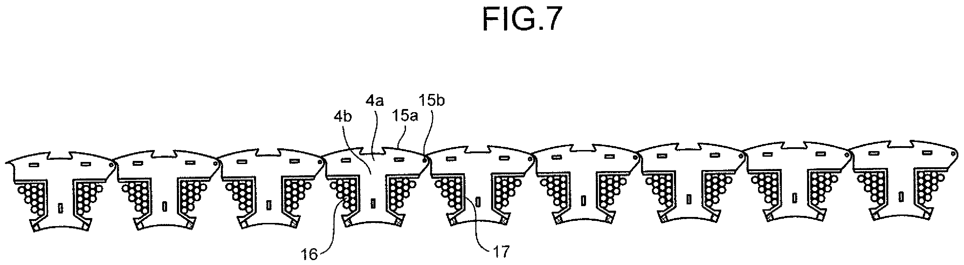

FIG. 7 is a diagram of a coupling body for the divided cores 15a. As shown in FIG. 7, the stator 2 is formed by, after winding, over insulating materials 17, winding wires 16 around the teeth sections 4b of the divided cores 15a coupled to one another in series by the coupling sections 15b, forming the coupled divided cores 15a in an annular shape. By forming the stator 2 in this way, compared with a general stator of an integral core (winding wires are inserted from spaces among teeth sections (slot openings) adjacent to one another), it is possible to form gaps among distal ends of teeth sections 4b adjacent to one another narrow.

As shown in FIG. 2, the teeth section 4b includes a base section 18 and increased magnetic-resistance sections 19a and 19b extending toward the distal ends of the base section 18. The base section 18 means the teeth section of the conventional stator. In general, a gap between the base sections 18 adjacent to each other has an optimum width that has excellent magnetic characteristics. If the gap is too wide, a range in which the magnetic flux of the magnet can be caught is narrowed. If the gap is too narrow, the magnetic flux is short-circuited between the teeth section distal ends adjacent to each other. A proper width may be selected according to the relationship with cogging torque or iron loss. In the embodiment, the gap between the adjacent base sections 18 is adjusted such that the amount of magnetic flux interlinked with the stator 2 is large and the cogging torque is small.

The base section 18 is formed by a radial-direction extending section 18a extending in the radial direction and a circumferential-direction extending section 18b connected to the inner diameter side of the radial-direction extending section 18a and extending along the outer circumferential surface of the rotor 6. The increased magnetic-resistance section 19a is provided at one end in the circumferential direction of the circumferential-direction extending section 18b. The increased magnetic-resistance section 19b is provided at the other end in the circumferential direction of the circumferential-direction extending section 18b. The magnetic resistance of the increased magnetic-resistance sections 19a and 19b is larger than the magnetic resistance of the base section 18. Note that FIG. 3 is a partially enlarged sectional view of the configuration of a conventional permanent-magnet-embedded electric motor. As shown in FIG. 3, in a conventional stator, an increased magnetic-resistance section is not provided in the base section 18. Note that, in FIG. 3, components that are the same as the components shown in FIG. 2 are denoted by the same reference numerals and letters.

Further, the configuration of the embodiment is specifically explained here. In the stator core 3 formed by laminating a plurality of electromagnetic steel plates, the base section 18 is formed in a normal electromagnetic steel plate thickness. The increased magnetic-resistance sections 19a and 19b extending to the distal end of the base section 18 are formed by applying etching to parts extending to the distal end of the base section 18 and by setting the thickness of the parts smaller than the thickness of the base section 18. For example, the thickness of the base section 18 is set to 0.35 millimeter and the thickness of the increased magnetic-resistance sections 19a and 19b to 0.15 millimeter.

Further, in the embodiment, given that a minimum interval in the circumferential direction between the adjacent base sections 18 is represented as La; an interval of a minimum gap between the adjacent teeth sections 4b including the increased magnetic-resistance sections 19a and 19b is represented as Lb; and an interval of air gaps (the width of the air gap 11) is represented as Lg, then the relation La>2Lg>Lb holds in its configuration. For example, La=2.5mm, Lg=0.7mm, and Lb=0.3mm, here.

The stator 2 is formed by winding the winding wires 16 (FIG. 7) around the slot sections 5 of the stator core 3 over the insulating materials 17 (FIG. 7). An electric current having a frequency synchronized with the commanded number of revolutions is energized in the stator 2, whereby a rotational magnetic field can be generated.

The electric motor 1 in the embodiment performs variable speed driving according to PWM control by the inverter of the driving circuit to thereby enable high-efficiency operation adjusted to a requested product load condition. The electric motor 1 is mounted in, for example, an air-conditioner compressor and guaranteed for use in a high-temperature atmosphere of 100°C or higher.

Operation of the embodiment is explained here. In general, in a permanent-magnet-embedded electric motor, a large armature reaction occurs and an opposing magnetic field is sometimes applied to a rotor, for example, when a load is large, when the permanent-magnet-embedded electric motor becomes in a lock state during an operation because of an excess load, when the permanent-magnet-embedded electric motor is in a transient state during startup or the like, or when a stator winding wire is short-circuited. In particular, in the case of the concentrated winding system, teeth adjacent to each other change into unlike poles, inductance increases, and an opposing magnetic field is easily applied to the rotor. The opposing magnetic field means a magnetic field of a pole opposing the direction of a magnetic pole in the rotor generated by energizing the stator.

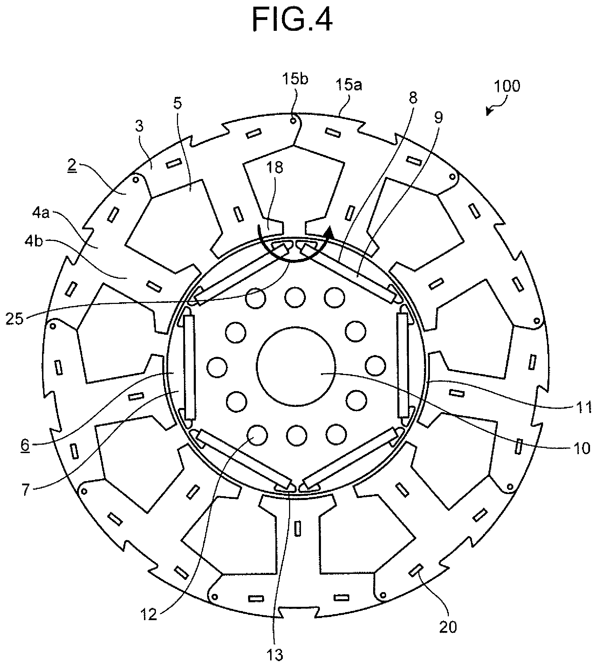

Such an opposing magnetic field has a characteristic whereby it flows in a place of least magnetic resistance and avoids a place where magnetic resistance is large. In particular, when a gap between teeth distal ends of a normal stator (equivalent to the gap La shown in FIG. 3) has the relation La>2Lg with respect to the air gap Lg, magnetic resistance of the gap between the teeth distal ends is larger than the magnetic resistance in the air gap. Therefore, as shown in FIG. 4, an opposing magnetic field 25 generated from the teeth section 4b is about to pass along a route from the teeth section 4b, to the rotor 6, and to the teeth section 4b where magnetic resistance is smaller than magnetic resistance between the adjacent teeth sections. Note that FIG. 4 is a diagram of a state in which the opposing magnetic field (a demagnetizing field) 25 occurs in the conventional permanent-magnet-embedded electric motor. FIG. 4 is the same as FIG. 1 except that the increased magnetic-resistance sections 19a and 19b are not provided. Components that are the same as the components shown in FIG. 1 are denoted by the same reference numerals and letters.

However, when a magnetic flux short-circuit preventing hole is provided in a rotor embedded with a permanent magnet on a rotor surface, in particular, on a rotor outer circumference side at the end of the permanent magnet, a magnetic flux is easily concentrated in a thin part in the rotor outer circumference due to its structure. That is, to improve the magnetic characteristics of a general electric motor, it is preferable to arrange the permanent magnet on the rotor surface as much as possible and provide the magnetic flux short-circuit preventing hole at the end of the permanent magnet. However, when an opposing magnetic field is applied to the rotor because of an overload or the like, the thin part in the rotor outer circumference section is magnetically saturated and a part of the opposing magnetic field passes through the permanent magnet and causes demagnetization. In particular, the part to be easily demagnetized is the end of the permanent magnet under the magnetic flux short-circuit preventing hole.

The permanent magnet keeps its original magnetic characteristic until the opposing magnetic field reaches a threshold magnitude. However, when the opposing magnetic field exceeds the threshold, residual magnetic flux density decreases and irreversible magnetization occurs in which original magnetic characteristics do not return. When irreversible demagnetization occurs, the residual magnetic flux density of the permanent magnet decreases, the electric current for generating torque increases, and the efficiency of the electric motor deteriorates, moreover, controllability of the electric motor deteriorates, leading to deterioration in reliability.

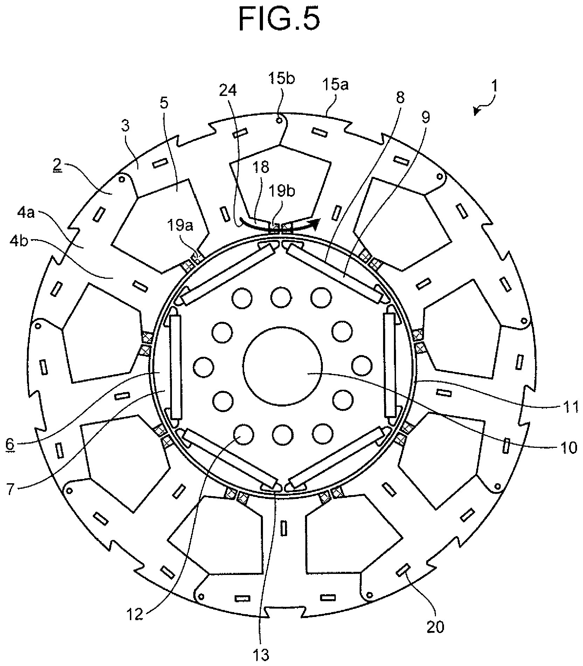

As explained above, in the embodiment, the teeth section 4b of the stator 2 includes the base section 18 and the parts (the increased magnetic-resistance sections 19a and 19b) with large magnetic resistance extending to the distal end of the base section 18 and is configured to satisfy the relation La>2Lg>Lb. Thus, while realizing an electric motor with excellent magnetic characteristics in which La is predominant during normal operation, when however, a large current flows and the rotor 6 is magnetically saturated, a situation is created in which magnetic resistance is smaller in a case where the opposing magnetic field passes through the adjacent increased magnetic-resistance sections 19a and 19b than in a case where the opposing magnetic field passes between the adjacent teeth sections 4b via the rotor 6. Thus, as shown in FIG. 5, the opposing magnetic field (the demagnetizing field) 24 is capable of short-circuiting Lb and suppressing demagnetization of the permanent magnet 9. Note that FIG. 5 is a diagram of a situation in which the opposing magnetic field (the demagnetizing field) 24 occurs in the configuration shown in FIG. 1.

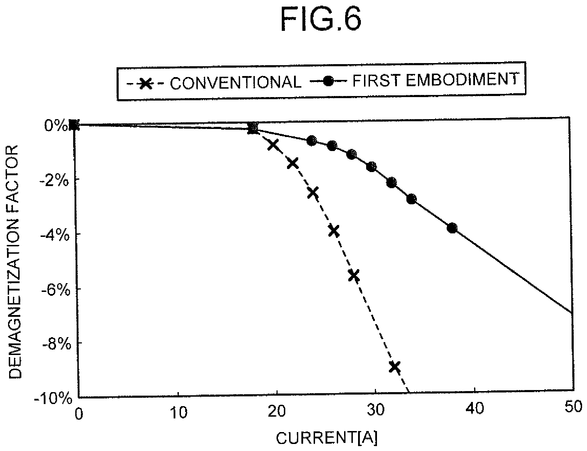

FIG. 6 is a diagram of a comparison result of demagnetizing percentages in the permanent magnets 9 having the same coercive force after the opposing magnetic field is applied to the rotor 6 in the electric motor 1 according to the first embodiment and the conventional electric motor 100. In FIG. 6, the abscissa represents an energization current and the ordinate represents a demagnetization factor. The demagnetization factor represents a change in the amounts of magnetic fluxes generated by the rotor 6 before and after application of a magnetomotive force. In general, when an electric motor is demagnetized, the performance of a compressor provided with the electric motor and a refrigeration air conditioner provided with the compressor fluctuates and the voltage generated in the electric motor varies. Therefore, controllability of the electric motor deteriorates. To be satisfactorily reliable, the demagnetization factor of a product needs to be reduced to a decrease of approximately 3%. As shown in FIG. 6, in the electric motor 1 according to the embodiment, compared with the conventional electric motor, a magnetomotive force to be demagnetized 3% is higher by approximately 30%. When the electric motor 1 is used in a current range that is the same as a current range of a conventional product, it is possible to use a magnet having a lower coercive force. That is, according to the embodiment, it is possible to reduce the amount of rare earth additive for improving a coercive force and it is possible to configure the electric motor 1 at a low cost.

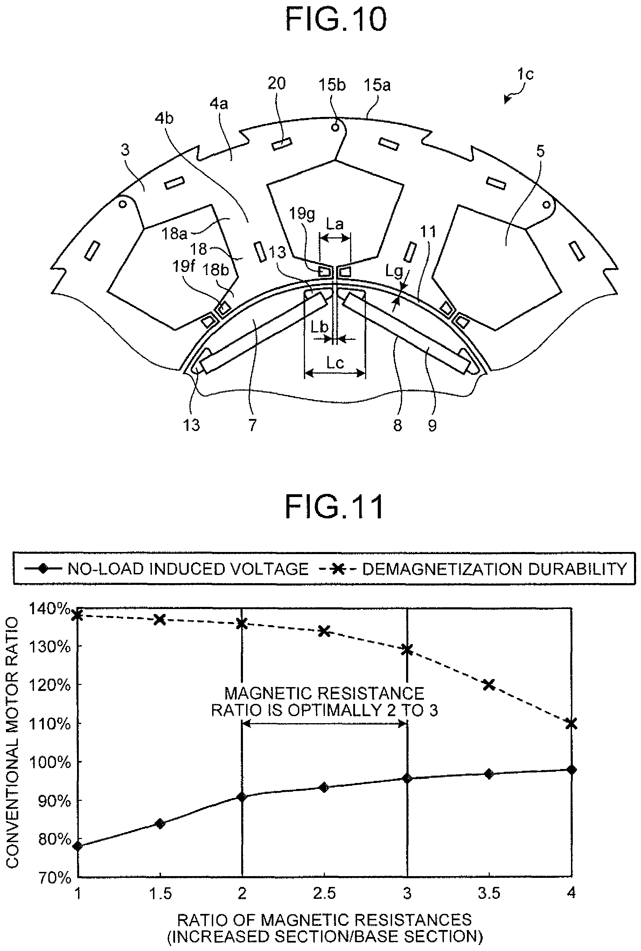

FIG. 11 is a diagram of the relation between an induced voltage and demagnetization durability with respect to the ratio of magnetic resistances of the magnetic resistance of the increased sections 19a and 19b to the base section 18. The abscissa represents (magnetic resistance of the increased magnetic-resistance sections 19a and 19b)/(magnetic resistance of the base section 18). The ordinate represents a no-load induced voltage and demagnetization durability with respect to a conventional electric motor. A larger ratio of the magnetic resistances means that the increased magnetic-resistance sections 19a and 19b are closer to the voids and the electric motor 1 is more similar to a conventional electric motor. When the ratio of the magnetic resistances becomes 1, this means that the increased magnetic-resistance sections 19a and 19b have magnetic resistance that are the same as the magnetic resistance of the base section 18 and are in a same state as a state in which the teeth distal end is simply extended. The induced voltage is a voltage induced in the stator winding wire when the rotor 6 is rotated. As the value of the induced voltage gets larger, a larger number of magnetic fluxes are interlinked and the electric motor has more excellent magnet torque. Because the base section 18 is designed to be optimum under the configuration of the conventional electric motor, when the increased magnetic-resistance sections 19a and 19b extending to the distal end of the base section 18 are provided, a short-circuit of the magnetic flux occurs between the distal ends of the teeth sections 4b and the induced voltage drops. However, if the ratio of magnetic resistances is increased, the voltage drop can be reduced. Concerning the demagnetization durability, as the ratio of magnetic resistances is set smaller, an improvement effect increases because the demagnetizing field is easily short-circuited. As it is understood from FIG. 11, the improvement effect for the demagnetization durability is large with respect to a drop amount of the induced voltage. Therefore, a disadvantage equivalent to the induced voltage drop can be compensated for by the demagnetization durability improvement. For example, because the demagnetization durability is improved, the permanent magnet 9 having a small coercive force and containing a small amount of a heavy rare earth element can be used. Because the residual magnetic flux density of the permanent magnet 9 is improved according to the reduction in the content of the heavy rare earth element, it is possible to compensate for the drop of the induced voltage. It is understood from FIG. 11 that an area, where the drop of the induced voltage is small and the effect of the demagnetization durability improvement is large, is a range where the ratio of magnetic resistances is in a range of 2 to 3.

According to the embodiment, the teeth section 4b includes the base section 18 and the increased magnetic-resistance sections 19a and 19b, which are the parts extending to the distal end of the base section 18 with large magnetic resistance. Therefore, the stator 2 has both of the minimum interval La between the adjacent base sections 18 for obtaining a satisfactory magnetic characteristic and the interval Lb of the minimum gap between the adjacent teeth sections 4b by the increased magnetic-resistance sections 19a and 19b so as to improve the demagnetization characteristic. Thus, the stator 2 has a satisfactory magnetic characteristic and is excellent in a demagnetization characteristic. On the contrary, in the conventional electric motor, there is appropriate width in the gap between the adjacent base sections of the teeth sections. There is a problem in that, if the width is too wide, a range in which a magnetic flux of a magnet can be caught is narrowed and; if the gap is too narrow, the magnetic flux is short-circuited between teeth section distal ends adjacent to each other.

In the embodiment, given that a minimum interval between the adjacent base sections 18 is represented as La, an interval of a minimum gap between the adjacent teeth sections 4b is represented as Lb, and an air gap is represented as Lg, the teeth section 4b is configured such that a relation of La>2Lg>Lb holds. Consequently, the electric motor 1 is excellent in a magnetic characteristic in which La is predominant during normal operation; and further, when a large current is fed and the rotor 6 is magnetically saturated, the opposing magnetic field can short-circuit Lb and reduce demagnetization of the permanent magnet 9.

As explained above, in the embodiment, the interval of La is adjusted such that a normal magnetic characteristic becomes satisfactory. Therefore, it is possible to design a stator interlink amount of magnetic fluxes to be large and the cogging torque to be small. Further, it is possible to improve demagnetization durability when the opposing magnetic field occurs. In particular, it is possible to solve the problem in that demagnetization easily occurs in a rotor shape in which an interlinked magnetic flux amount to the stator 2 is increased by the magnetic flux short-circuit preventing hole 13. It is possible to design the electric motor 1 with the high efficiency.

According to the embodiment, the electric motor 1 with high efficiency and small cogging torque can be provided. Further, the electric motor 1 with high reliability in which the permanent magnet 9 is less easily demagnetized can be provided. Because the electric motor 1 is durable against demagnetization, if demagnetization durability is the same as the conventional demagnetization durability, it is possible to use the permanent magnet 9 with a low coercive force. It is possible to use an inexpensive rare earth magnet with a less additive amount of a heavy rare earth element. Further, when the additive amount of the heavy rare earth element is reduced, the residual magnetic flux density of the permanent magnet 9 is improved. Therefore, the magnet torque is improved. It is possible to reduce an electric current for generating the same torque and reduce a copper loss and an energization loss of the inverter.

According to the embodiment, because the electric motor 1 is durable against demagnetization, in a case where magnetization durability is the same as the conventional magnetization durability, it is possible to reduce a magnet thickness. It is possible to reduce an amount of use of an expensive rare earth magnet and provide the inexpensive electric motor 1.

In general, in a core that is integrally formed, a gap between teeth section distal ends cannot be reduced to be equal to or smaller than a fixed gap because a winding wire is wound via the gap. However, in the case of a divided core, because a stator is annularly formed after winding, it is possible to design the gap between the teeth section distal ends narrower. In the embodiment, a stator structure durable against demagnetization is realized by making use of the characteristic of the divided core 15a.

Note that, when width Lc in the circumferential direction of the adjacent magnetic flux short-circuit preventing holes 13 (an interval in the circumferential direction between both ends on the opposite side of a side where the adjacent magnetic flux short-circuit preventing holes 13 are opposed to each other) is formed larger than the minimum interval La between the adjacent base sections 18 (Lc>La) (see FIG. 2), the end of the permanent magnet 9 under the magnetic flux short-circuit preventing holes 13 is easily demagnetized. Therefore, the effects of the embodiment increase.

In the embodiment, the same effects can be attained irrespective of a wiring system, the number of slots, and the number of poles. In the case of the concentrated winding system, the teeth sections 4b adjacent to each other instantaneously change to unlike poles, inductance increases, and an opposing magnetic field is easily applied to the rotor 6. Therefore, it is possible to suitably apply the embodiment. The embodiment can also be applied to the rotor 6 in which the permanent magnets 9 are arranged on the surface of the rotor core 7, which directs the same effects.

In the embodiment, the example is explained in which the increased magnetic-resistance sections 19a and 19b are formed by applying etching on the parts equivalent to the increased magnetic-resistance sections 19a and 19b on the electromagnetic steel plate to set the thickness of the parts smaller than the thickness of the base section 18. However, the increased magnetic-resistance sections 19a and 19b can be configured by other methods. For example, in the stator core 3 configured by laminating a plurality of electromagnetic steel plates, the increased magnetic-resistance sections 19a and 19b can be formed by applying pressing or the like to the part extending to the distal end of the base section 18 and reducing magnetic permeability according to stress.

By mounting the electric motor 1 in the embodiment on each of a compressor and a refrigeration air conditioning apparatus, it is possible to provide the compressor and the refrigeration air conditioning apparatus with high reliability that have high efficiency and low noise and are less easily demagnetized.

### Second Embodiment

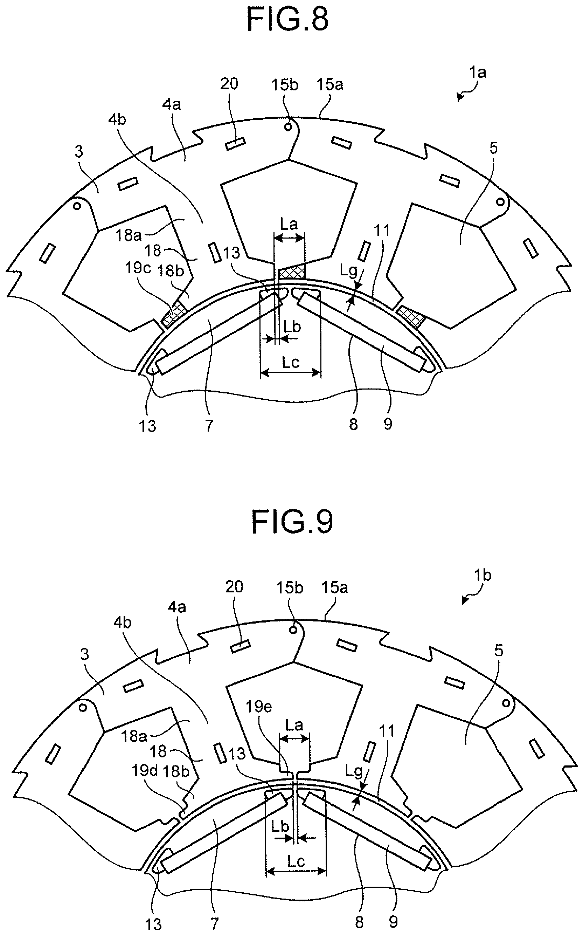

FIG. 8 is a partially enlarged sectional view of the configuration of a permanent-magnet-embedded electric motor according to the embodiment and is a diagram corresponding to FIG. 2 in the first embodiment. In the first embodiment, the increased magnetic-resistance sections 19a and 19b are provided symmetrically with respect to the base section 18. However, in an electric motor 1a in the embodiment, as shown in FIG. 8, the shape of an increased magnetic-resistance section 19c is asymmetrical with respect to the center of a teeth section 4b. That is, the base section 18 is formed by a radial-direction extending section 18a extending in the radial direction and a circumferential-direction extending section 18b both connected to the inner diameter side of the radial-direction extending section 18a and extending along the outer circumferential surface of the rotor 6. The increased magnetic-resistance section 19c is provided at only one end in the circumferential direction of the circumferential-direction extending section 18b. Note that, in FIG. 8, components same as the components shown in FIG. 2 are denoted by the same reference numerals and letters. The other components, operation, and effects of the embodiment are the same as those of the first embodiment.

### Third Embodiment

FIG. 9 is a partially enlarged sectional view of the configuration of a permanent-magnet-embedded electric motor according to the embodiment and is a diagram corresponding to FIG. 2 in the first embodiment. In an electric motor 1b in the embodiment, as shown in FIG. 9, in the stator core 3 formed by laminating a plurality of electromagnetic steel plates, with respect to the base section 18, increased magnetic-resistance sections 19d and 19e extending to the distal end of the base section 18 are formed as fine width protrusion sections extending to the distal end of the base section 18. That is, the base section 18 includes the radial-direction extending section 18a extending in the radial direction and the circumferential-direction extending section 18b connected to the inner diameter side of the radial-direction extending section 18a and extending along the outer circumferential surface of the rotor 6. At one end of the circumferential-direction extending section 18b, a protrusion-like increased magnetic-resistance section 19d is provided with a shape of forming a step at width in the radial direction smaller than the width in the radial direction of the end. At the other end of the circumferential-direction extending section 18b, a protrusion-like increased magnetic-resistance section 19e is provided with a shape of forming a step at width smaller than the width in the radial direction of the end. Note that, in an example shown in the figure, both of the increased magnetic-resistance sections 19d and 19e project on the inner diameter side from the base section 18 (i.e., the steps are provided on the outer diameter side). However, the increased magnetic-resistance sections 19d and 19e can project on the outer diameter side or can project to be provided such that steps are provided on both of the inner diameter side and the outer diameter side. Only one of the increased magnetic-resistance sections 19d and 19e can be provided and configured symmetrically. Note that, in FIG. 9, components same as the components shown in FIG. 2 are denoted by the same reference numerals and letters. The other components, action, and effects of the embodiment are the same as those of the first embodiment.

### Fourth Embodiment

FIG. 10 is a partially enlarged sectional view of the configuration of a permanent-magnet-embedded electric motor according to the embodiment and is a diagram corresponding to FIG. 2 in the first embodiment. In an electric motor 1c in the embodiment, as shown in FIG. 10, in the stator core 3 formed by laminating a plurality of electromagnetic steel plates, with respect to the base section 18, increased magnetic-resistance sections 19f and 19g extending to the distal end of the base section 18 are made by providing slits (voids) in parts extending toward the distal end of the base section 18. That is, the base section 18 is formed by the radial-direction extending section 18a extending in the radial direction and the circumferential-direction extending section 18b connected to the inner diameter side of the radial-direction extending section 18a and extending along the outer circumferential surface of the rotor 6. At one end of the circumferential-direction extending section 18b, the increased magnetic-resistance section 19f, which is the slit (the void), is provided. At the other end of the circumferential-direction extending section 18b, the increased magnetic-resistance section 19g, which is the slit (the void), is provided. Note that, only one of the increased magnetic-resistance sections 19f and 19g can be provided and configured symmetrically. Note that, in FIG. 10, components same as the components shown in FIG. 2 are denoted by the same reference numerals and letters. The other components, operation, and effects of the embodiment are the same as those of the first embodiment.

### Industrial Applicability

As explained above, the present invention is useful as a permanent-magnet-embedded electric motor, a compressor, and a refrigeration air conditioning apparatus.

### Reference Signs List

1, 1a to 1c, 100 Electric motor
2 Stator
3 Stator core
4a Back yoke section
4b Teeth section
5 Slot section
6 Rotor
7 Rotor core
8 Magnet insertion hole
9 Permanent magnet
10 Shaft hole
11 Air gap
12 Air hole
13 Magnetic flux short-circuit preventing hole
15a Divided core
15b Coupling section
16 Winding wires
17 Insulating material
18 Base section
18a Radial-direction extending section
18b Circumferential-direction extending section
19a to 19g Increased magnetic-resistance section
20 Swaged section
24, 25 Opposing magnetic fields

## Claims

1. A permanent-magnet-embedded electric motor (1, 1a to 1c, 100) comprising:
a stator (2) configured by winding winding wires (16) around teeth sections (4b) of stator cores (3),
the teeth sections (4b) being provided between a plurality of slot sections opened to an inner circumference side; and
a rotor (6)
rotatably arranged on an inner side of the stator (2) with an air gap (11) created between the rotor (6) and the stator (2) and said rotor (6) embedded with permanent magnets (9) respectively in a plurality of magnet insertion holes provided along a circumferential direction in an outer circumference section of a rotor core,
each of the permanent magnets (9) being embedded inside the rotor core wherein
the teeth sections (4b) include:
base sections (18) formed by
radial-direction extending sections (18a) extending in a radial direction and
circumferential-direction sections (18b) connected to inner diameter sides of the radial-direction extending sections (18a) and extending in a circumferential direction; and **characterised by** increased magnetic-resistance sections (19a to 19g) provided at least at one end in the circumferential direction of the circumferential-direction extending sections (18b) and having magnetic resistance larger than magnetic resistance of the base sections (18), and
given that a minimum interval in the circumferential direction between the base sections (18) of adjacent teeth sections (4b), from which are excluded the increased magnetic-resistance sections (19a,19b), is represented as La, a minimum gap in the circumferential direction between the base sections (18) of adjacent teeth sections (4b), which are included the increased magnetic-resistance sections (19a,19b), is represented as Lb, and the thickness of the air gap (11) between the rotor core and the stator core is represented as Lg, a relation of La>2Lg>Lb holds.

2. The permanent-magnet-embedded electric motor (1, 1a to 1c, 100) according to claim 1, wherein
the stator core is formed by laminating a plurality of electromagnetic steel plates, and
the increased magnetic-resistance sections (19a to 19g) are formed by applying etching on parts corresponding to the increased magnetic-resistance sections (19a to 19g) on the electromagnetic steel plates to thereby set thickness of the parts to be smaller than thickness of the base sections (18).

3. The permanent-magnet-embedded electric motor (1, 1a to 1c, 100) according to claim 1, wherein
the stator core is formed by laminating a plurality of electromagnetic steel plates, and
the increased magnetic-resistance sections (19a to 19g) are formed by applying pressing on parts corresponding to the increased magnetic-resistance sections (19a to 19g) on the electromagnetic steel plates.

4. The permanent-magnet-embedded electric motor (1, 1a to 1c, 100) according to claim 1, wherein
the stator core is formed by laminating a plurality of electromagnetic steel plates, and
the increased magnetic-resistance sections (19a to 19g) are
formed as protrusion sections
provided at least at one end in the circumferential direction of the circumferential-direction extending section and
provided by forming steps with width in the radial direction smaller than width in the radial direction of the one end.

5. The permanent-magnet-embedded electric motor (1, 1a to 1c, 100) according to claim 1, wherein
the stator core is formed by laminating a plurality of electromagnetic steel plates, and
the increased magnetic-resistance sections (19a to 19g) are configured as slits provided at least at one end in the circumferential direction of the circumferential-direction extending sections (18b).

6. The permanent-magnet-embedded electric motor (1, 1a to 1c, 100) according to claim 1, wherein
magnetic resistance of the increased magnetic-resistance sections (19a to 19g) is two to three times as large as magnetic resistance of the base sections (18).

7. The permanent-magnet-embedded electric motor (1, 1a to 1c, 100) according to claim 1, wherein
magnetic flux short-circuit preventing holes are respectively provided at each both ends in the circumferential direction of the magnet insertion holes,
an interval Lc in the circumferential direction between both ends on an opposite side of a side, where the magnetic flux short-circuit preventing holes adjacent to each other are opposed to each other, is larger than the interval Lb of the minimum gap between the adjacent teeth sections (4b).

8. A compressor provided with the permanent-magnet-embedded electric motor (1, 1a to 1c, 100) according to claim 1.

9. A refrigeration air conditioning apparatus provided with the compressor according to claim 8.

## Patentansprüche

1. Elektromotor mit eingebetteten Permanentmagneten (1, 1a bis 1c, 100), umfassend:
einen Stator (2), der durch Wickeln von Wickeldrähten (16) um Zahnabschnitte (4b) von Statorkernen (3) konfiguriert ist,
wobei die Zahnabschnitte (4b) zwischen einer Vielzahl von Schlitzabschnitten bereitgestellt sind, die zu einer Innenumfangsseite geöffnet sind; und
einen Rotor (6), der an einer Innenseite des Stators (2) mit einem zwischen dem Rotor (6) und dem Stator (2) ausgebildeten Luftspalt (11) rotierbar angeordnet ist, und
der Rotor (6) eingebettet mit Permanentmagneten (9) jeweils in eine Vielzahl von Magneteinsetzlöcher, die entlang einer Umfangsrichtung in einem Außenumfangsabschnitt eines Rotorkerns bereitgestellt sind,
wobei jeder der Permanentmagneten (9) innerhalb des Rotorkerns eingebettet ist, wobei die Zahnabschnitte (4b) umfassen:
Basisabschnitte (18), die durch sich in radialer Richtung erstreckende Abschnitte (18a) ausgebildet sind, die sich in einer radialen Richtung erstrecken und
Umfangsrichtungsabschnitte (18b), die mit Innendurchmesserseiten der sich in radialer Richtung erstreckenden Abschnitte (18a) verbunden sind und sich in einer Umfangsrichtung erstrecken; und
**gekennzeichnet durch**
erhöhter magnetischer Widerstandsabschnitte (19a bis 19g), die zumindest an einem Ende in der Umfangsrichtung der sich in Umfangsrichtung erstreckenden Abschnitte (18b) bereitgestellt sind, und magnetischen Widerstand größer als magnetischen Widerstand der Basisabschnitte (18) aufweisen, und
vorausgesetzt, dass ein Mindestabstand in der Umfangsrichtung zwischen den Basisabschnitten (18) von benachbarten Zahnabschnitten (4b), von welchen die Abschnitte mit erhöhtem magnetischen Widerstand (19a, 19b) ausgeschlossen sind, als LA repräsentiert ist, ein Mindestspalt in der Umfangrichtung zwischen den Basisabschnitten (18) von benachbarten Zahnabschnitten (4b), in welchen die erhöhter magnetischer Widerstandsabschnitte (19a, 19b) eingeschlossen sind, als Lb repräsentiert ist, und die Dicke des Luftspalts (11) zwischen dem Rotorkern und dem Statorkern als Lg repräsentiert ist, eine Beziehung von La>2Lg>Lb gilt.

2. Elektromotor mit eingebetteten Permanentmagneten (1, 1a bis 1c, 100) nach Anspruch 1, wobei
der Statorkern durch Laminieren einer Vielzahl von elektromagnetischen Stahlplatten ausgebildet ist, und
die erhöhter magnetischer Widerstandsabschnitte (19a bis 19g) ausgebildet sind durch Anwendung von Ätzen auf Teilen entsprechend den erhöhter magnetischer Widerstandsabschnitten (19a bis 19g), auf den elektromagnetischen Stahlplatten, so dass dadurch eine Dicke der Teile gesetzt wird kleiner zu sein als eine Dicke der Basisabschnitte (18).

3. Elektromotor mit eingebetteten Permanentmagneten (1, 1a bis 1c, 100) nach Anspruch 1, wobei
der Statorkern durch Laminieren einer Vielzahl von elektromagnetischen Stahlplatten ausgebildet ist, und
die erhöhter magnetischer Widerstandsabschnitte (19a bis 19g) ausgebildet sind durch Anwendung von Pressen auf Teile entsprechend den erhöhter magnetischer Widerstandsabschnitten (19a bis 19g), die auf den elektromagnetischen Stahlplatten.

4. Elektromotor mit eingebetteten Permanentmagneten (1, 1a bis 1c, 100) nach Anspruch 1, wobei
der Statorkern durch Laminieren einer Vielzahl von elektromagnetischen Stahlplatten ausgebildet ist, und
die erhöhter magnetischer Widerstandsabschnitte (19a bis 19g) als Vorsprungsabschnitte ausgebildet sind, die zumindest an einem Ende in der Umfangsrichtung des sich in Umfangsrichtung erstreckenden Abschnitts bereitgestellt sind und
bereitgestellt sind durch Ausbildung von Stufen mit einer Breite in der radialen Richtung kleiner als eine Breite in der radialen Richtung von dem einen Ende.

5. Elektromotor mit eingebetteten Permanentmagneten (1, 1a bis 1c, 100) nach Anspruch 1, wobei
der Statorkern durch Laminieren einer Vielzahl von elektromagnetischen Stahlplatten ausgebildet ist, und
die erhöhter magnetischer Widerstandsabschnitte (19a bis 19g) als Schlitze konfiguriert sind, die zumindest an einem Ende in der Umfangsrichtung der sich in Umfangsrichtung erstreckenden Abschnitte (18b) bereitgestellt sind.

6. Elektromotor mit eingebetteten Permanentmagneten (1, 1a bis 1c, 100) nach Anspruch 1, wobei
magnetischer Widerstand der Abschnitte mit erhöhtem magnetischen Widerstand (19a bis 19g) zwei bis drei Mal so groß ist wie magnetischer Widerstand der Basisabschnitte (18).

7. Elektromotor mit eingebetteten Permanentmagneten (1, 1a bis 1c, 100) nach Anspruch 1, wobei
Magnetflusskurzschluss-Verhinderungslöcher jeweils an beiden Enden in der Umfangsrichtung der Magneteinsetzlöcher bereitgestellt sind,
ein Abstand Lc in der Umfangsrichtung zwischen beiden Enden an einer gegenüberliegenden Seite einer Seite, wo die zueinander benachbarten Magnetflusskurzschluss-Verhinderungslöcher einander gegenüberliegen, größer ist als der Abstand Lb des Mindestspalts zwischen den benachbarten Zahnabschnitten (4b).

8. Verdichter, der mit dem Elektromotor mit eingebetteten Permanentmagneten (1, 1a bis 1c, 100) nach Anspruch 1 ausgestattet ist.

9. Kühl-Klimaanlage, die mit dem Verdichter nach Anspruch 8 ausgestattet ist.

## Revendications

1. Moteur électrique à aimants permanents incorporés (1, 1a à 1c, 100) comprenant :
un stator (2) configuré en enroulant des fils d'enroulement (16) autour des sections dents (4b) des noyaux de stator (3), les sections dents (4b) étant disposées entre une pluralité de sections fentes ouvertes vers un côté circonférentiel intérieur ; et
un rotor (6) agencé de manière rotative sur un côté intérieur du stator (2) avec un entrefer (11) créé entre le rotor (6) et le stator (2), et ledit rotor (6) incorporant des aimants permanents (9) respectivement dans une pluralité de trous d'insertion d'aimants disposés le long d'une direction circonférentielle dans une section circonférentielle extérieure d'un noyau de rotor ;
chacun des aimants permanents (9) étant incorporé à l'intérieur du noyau de rotor, dans lequel :
les sections dents (4b) comprennent :
des sections de base (18) formées par des sections qui s'étendent dans une direction radiale (18a) qui s'étendent dans une direction radiale ; et
des sections dans une direction circonférentielle (18b) connectées à des côtés diamètres intérieurs des sections qui s'étendent dans une direction radiale (18a), et qui s'étendent dans une direction circonférentielle ; et
**caractérisé par** :
des sections qui présentent une résistance magnétique accrue (19a à 19g), disposées au niveau d'une extrémité au moins dans la direction circonférentielle des sections qui s'étendent dans une direction circonférentielle (18b), et qui présentent une résistance magnétique supérieure à la résistance magnétique des sections de base (18) ; et
en supposant que l'intervalle minimum dans la direction circonférentielle entre les sections de base (18) des sections dents adjacentes (4b), d'où sont exclues les sections qui présentent une résistance magnétique accrue (19a, 19b), est représenté par La, que l'intervalle minimum dans la direction circonférentielle entre les sections de base (18) des sections dents adjacentes (4b), où sont inclues les sections qui présentent une résistance magnétique accrue (19a, 19b), est représenté par Lb, et que l'épaisseur des entrefers (11) entre le noyau de rotor et le noyau de stator, est représentée par Lg, la relation suivante La > 2 Lg > Lb est satisfaite.

2. Moteur électrique à aimants permanents incorporés (1, 1a à 1c, 100) selon la revendication 1, dans lequel :
le noyau de stator est formé en stratifiant une pluralité de tôles d'acier électromagnétique ; et
les sections qui présentent une résistance magnétique accrue (19a à 19g), sont formées en appliquant une gravure sur des parties qui correspondant aux sections qui présentent une résistance magnétique accrue (19a à 19g) sur les plaques d'acier électromagnétique, de façon à ce que l'épaisseur des parties soit inférieure à l'épaisseur des sections de base (18).

3. Moteur électrique à aimants permanents incorporés (1, 1a à 1c, 100) selon la revendication 1, dans lequel :
le noyau de stator est formé en stratifiant une pluralité de tôles d'acier électromagnétique ; et
les sections qui présentent une résistance magnétique accrue (19a à 19g), sont formées en appliquant une pression sur des parties qui correspondent aux sections qui présentent une résistance magnétique accrue (19a à 19g) sur les plaques d'acier électromagnétique.

4. Moteur électrique à aimants permanents incorporés (1, 1a à 1c, 100) selon la revendication 1, dans lequel :
le noyau de stator est formé en stratifiant une pluralité de tôles d'acier électromagnétique ; et
les sections qui présentent une résistance magnétique accrue (19a à 19g), sont formées en tant que sections en saillie disposées au niveau de l'une des extrémité au moins dans la direction circonférentielle de la section qui s'étend dans une direction circonférentielle, et disposées en formant des marches dont la largeur dans la direction radiale, est inférieure à la largeur dans la direction radiale de l'une des extrémités.

5. Moteur électrique à aimants permanents incorporés (1, 1a à 1c, 100) selon la revendication 1, dans lequel :
le noyau de stator est formé en stratifiant une pluralité de tôles d'acier électromagnétique ; et
les sections qui présentent une résistance magnétique accrue (19a à 19g), sont configurées en tant que fentes disposées au niveau d'une extrémité au moins dans la direction circonférentielle des sections qui s'étendent dans une direction circonférentielle (18b).

6. Moteur électrique à aimants permanents incorporés (1, 1a à 1c, 100) selon la revendication 1, dans lequel :
la résistance magnétique des sections qui présentent une résistance magnétique accrue (19a à 19g) est de deux à trois fois supérieure à la résistance magnétique des sections de base (18).

7. Moteur électrique à aimants permanents incorporés (1, 1a à 1c, 100) selon la revendication 1, dans lequel :
des trous destinés à éviter de court-circuiter le flux magnétique, sont disposés de manière respective au niveau de chacune des deux extrémités dans la direction circonférentielle des trous d'insertion d'aimants ;
un intervalle Lc dans la direction circonférentielle entre les deux extrémités d'un bord opposé d'un côté, où les trous destinés à éviter de court-circuiter le flux magnétique adjacents les uns aux autres, sont opposés les uns aux autres, est supérieur à l'intervalle Lb de l'intervalle minimum entre les sections dents adjacentes (4b).

8. Compresseur doté du moteur électrique à aimants permanents incorporés (1, 1a à 1c, 100) selon la revendication 1.

9. Appareil de climatisation de réfrigération doté du compresseur selon la revendication 8.
